## Europäisches Patentamt
## European Patent Office
## Office européen des brevets

(19)

(11) Publication number: **0 044 614**
**A2**

(12) **EUROPEAN PATENT APPLICATION**

(21) Application number: **81302645.7**

(22) Date of filing: **15.06.81**

(51) Int. Cl.³: **C 03 C 25/02**
**D 06 M 5/00**

(30) Priority: **27.06.80 GB 8021190**
**30.01.81 GB 8102998**

(43) Date of publication of application:
**27.01.82 Bulletin 82/4**

(84) Designated Contracting States:
**BE DE FR GB IT NL SE**

(71) Applicant: **TBA Industrial Products Limited**
**20, St. Mary's Parsonage**
**Manchester M3 2NL(GB)**

(72) Inventor: **Bridge, Malcolm**
**3 Heather Bank**
**Littleborough, Lancs.(GB)**

(72) Inventor: **Sunderland, Howard Lee**
**46 Rose Avenue**
**Littleborough, Lancs.(GB)**

(74) Representative: **Crux, John Anthony et al,**
**20 St. Mary's Parsonage**
**Manchester M3 2NL(GB)**

(54) **Improvements in and relating to glass fabrics.**

(57) Glass fabrics are given enhanced weld splash resistance by treating them with a non-intumescent, char-forming composition, for example a mixture of a dehydratable polyol and a dehydrating agent.

EP 0 044 614 A2

Croydon Printing Company Ltd.

- 1 -

## Improvements in and relating to Glass Fibres

This invention relates to glass or mineral fibre fabrics, herein referred to as glass fabrics and is particularly concerned with a method of treating such fabrics to enhance their resistance to intense relatively localised heating, such as from drops of molten metal produced during welding operations or from naked flames. For convenience, this resistance will be termed "weld splash resistance" in this specification.

Hitherto asbestos fabrics have been used where there was a risk of molten metal splash damage, or of accidental short-term flame exposure. Asbestos is well-suited to such use because although severe heating causes embrittlement there is no immediate loss of integrity. By contrast, even thick, heavy glass fibre fabrics melt away from a localised intense heat source in a matter of seconds, if the temperature is above the softening point of the glass. Naked flames and molten metal splashes quickly penetrate ordinary glass fabrics by simply melting them at the point of contact.

Attempts to alleviate this problem have been made by treating glass fabrics with commercial intumescent paints. However, although these paints effect an improvement, they create other problems. The main problem is their stiffness when dry. This renders the treated fabric boardlike and has to be countered by adding a substantial proportion of a plasticiser, typically 15% by weight of the paint solids. This creates a second problem, namely that the treated fabric when strongly heated, as in use, emits excessive smoke fumes. In effect, the plasticised paint coating tends to burn and the combustion products are a hazard in their own right.

According to the present invention, the weld splash resistance of a glass fabric is improved by treating the fabric with a non-intumescent char-forming composition.

"Non-intumescent char-forming composition" means in this context a composition which on exposure to relatively intense heat, e.g. above 250°C, forms a carbonaceous coating on the fibres of the fabric, but substantially without any intumescence. Contrary to expectation, it has been found that intumescence is not necessary and that indeed weld splash resistance appears to be improved without it.

Whilst glass fabrics treated as above are satisfactory for many purposes, their level of smoke emission on heating still tends to render them unsatisfactory for use in confined spaces.

According to a further aspect of the present invention, the smoke and/or flame emission properties of a glass fibre fabric treated with a non-intumescent, char-forming composition are reduced by subjecting the treated fabric to a carbonising treatment. Carbonising in this present context means heating the treated fabric to develop charring of the char-forming composition, without at the same time affecting the integrity of the glass fabric itself to any significant extent.

Optionally, the carbonised fabric may be mangled to soften it, followed by a minimal surface treatment with a flexible film-forming binder and/or a lubricant, in order to render the product cleaner to handle and/or more flexible.

The preferred char-forming compositions comprise one or more dehydrateable polyols and one or more thermally-activated dehydration catalysts. The polyol should be present in an amount sufficient to leave 2 to 20% by weight on the dry fabric, 3 to 15% being preferred. When making this calculation, allowance should be made for any polyol already on the fabric; for example starch used as a weaving size. Suitable polyols include sugars, starches, glycerol, pentaerythritol, its dimer and trimer. The dehydrating agents, which may be free strong acids (such as phosphoric or sulphuric), their ammonium or amine salts, polyphosphates, phosphate esters or borates, are incorporated at from 5 to 75% of the weight of the polyol, the preferred range being 10 to 40%. These dehydrating agents are well known and need not be discussed further, except to say that on the grounds of cost and availability, the simple acids and mono and di-ammonium phosphates are preferred. A lubricant, which may be a silicone oil, can be used, at levels of up to about 2% on fabric weight. Optionally, the composition may also contain a plasticiser for the polyol. In the case of starch, about 10% by weight of the starch solids of polyethylene glycol has proved effective. Optionally also, a binder such as a flexible polymer latex can be added in a similar proportion to help retain the composition on the fabric during/after drying. An acrylic latex binder has proved effective and although other polymers will work, some experiments may be required in order to ensure compatibility of the latex dispersing system with the dehydrating agent chosen.

The selection of a suitable polyol, or mixture of polyols, is clearly important. Sugars starches are, on the whole, much the cheapest of the useful polyols and may be preferred for that reason.

Insoluble polyols, for example, some starches and the dimer and trimer of pentaerythritol, give particularly dirty products.

Single component, self-catalysing non-intumescent char-forming material can also be employed. For example, melammonium pentate and polyol derivative containing "leaving" groups can be used. The use of these is within the scope of the invention.

It will be appreciated that the foregoing remarks are primarily relevant to the fabric prior to the carbonising treatment. This latter treatment may be carried out either as a continuous process on the fabric in open width, or otherwise in roll form. In either case, the exact conditions are a matter for experiment. In general, longer heating times and higher temperatures lead to a reduction in smoke emission at the expense of loss of cleanliness and flexibility. Properly carbonised samples do not exhibit burning of the original glass fibre dressing at all. There is some tendency for the heat resistance and fabric strength to fall with increasing carbonising time and temperature but hese changes are generally acceptable. Temperatures within the range 170-350°C, preferably 210-280°C and heating times of 2-20 minutes, preferably 5-15 minutes, have been found adequate for most open-width carbonising treatments. Satisfactory roll-form carbonisation is much more difficult. The fabric should be impregnated and dried in open width before being rolled and placed in the carbonising oven. If the cloth is rolled wet, severe char-forming composition migration problems occur in almost all cases. The oven should have an automatic temperature programmer which should be set at an initial temperature just below that at which the dehydration reaction begins.

This may be determined by a standard chemical technique such as thermogravimetric analysis. The temperature should then be raised slowly and steadily to a maximum towards the bottom end of the range quoted for open width carbonisation. If the initial temperature is too high, or if the temperature rise is too rapid, the reaction, which is strongly exothermic, gets out of hand and generates heat faster than it can be dissipated, resulting in an excessive temperature in the inner layers of the roll of fabric. At best, this causes uneven carbonisation, at worst, extensive damage to the fabric. A typical treatment for a fabric treated with a starch/ammonium phosphate system might be to heat from 160°C to 260°C over 48 hours.

After carbonisation, the handle of the fabric can be much improved by mangling. However, this tends to loosen the char, making the fabric dirtier so we prefer that it is accompanied by the application to both faces of the fabric of a light dressing of a binder, preferably a flexible film-forming polymer applied from solution or in emulsified form. Spraying, or one of the known 'minimum add-on' techniques such as padding through foam are preferred methods of application. We find approximately 0.25% on fabric weight of binder on each fabric face to be a suitable level, but this is also a matter for experiment. If it is desired to incorporate a lubricant in the final product, it can equally well be done after the carbonisition. At this stage, the temperature resistance of the lubricant is no longer important and a wide range of textile lubricants can be considered for use.

The sequence of mangling and lubricant treatment does not appear to be important; these treatments may be carried out in either order.

In order that the invention be better understood preferred embodiments of it will now be described by way of example.

Example 1

A 2000 gm/square metre twill weave glass fabric woven from bulked continuous filament 'E' glass yarns was padded through a liquid composition comprising:-

| Farina starch | | 17.5 parts by weight |  |  |
|---|---|---|---|---|
| di-ammonium hydrogen phosphate | | 7.0 | " | " | " |
| Acrylic polymer | | 1.8 | " | " | " |
| Polyethylene glycol (400 grade) | | 1.8 | " | " | " |
| Water | to | 100 | " | " | " |

The pick-up was adjusted to 40% by weight, giving 7% starch by weight of the fabric. After drying, the fabric was tested by clamping a portion of it against a metal ring about 100mm in diameter. The fabric was pressed through the ring during clamping so as to generate a near-hemispherical depression. 500 gm of molten aluminium bronze at about 1200°C was then poured into this depression and allowed to solidify. This was at ambient temperature and without any external cooling being applied. Although the softening temperature of the 'E' glass used was about 700°C, the fabric was not penetrated by the metal, which was subsequently removed as a solid ingot clearly bearing on the hemispherical side the imprint of the twill weave. The fabric was obviously embrittled, but not melted, despite the severity of the intense localised heating which had been applied to it.

An untreated sample of the same fabric having only about 3% of starch-based weaving size on it was subjected to exactly the same test. Its weld splash resistance was nil, for all practical purposes. The relative merits of the above treatment and untreated fabric were also evaluated by a weld splash test as follows:-

Example 2

Treated and untreated fabric samples (as in Example 1) were stretched over a horizontal steel ring 75 mm in diameter and molten steel was dripped onto them from a height of 125mm. The steel drips were made by heating the end of a 6mm steel rod with a welding torch, to simulate an actual welding operation. After 3 drops of molten steel weighing aout 6 or 7 gm in total had fallen on the untreated fabric, penetration occurred. The treated fabric was essentially unaffected in that it retained its integrity and was unpenetrated by a similar quantity of molten steel.

Example 2

The fabric of example 1 was treated by padding through a composition comprising:-

0044614

- 8 -

| Farina starch | 20 parts by weight | | | |
|---|---|---|---|---|
| di-ammonium hydrogen phosphate | 4 | " | " | " |
| Acrylic polymer | 2 | " | " | " |
| Polyethylene glyco (400 grade) | 2 | " | " | " |
| Water | to 100 | " | " | " |

The pick up was adjusted to 50%, corresponding to 10% by weight of starch on the dry fabric.

The product was tested for integrity under fire by a method based on British Standard 476 (part 8). The fabric was exposed to a progressive rise in temperature from ambient to 1050°C over a period of 1 hour whilst subjecting it to an air pressure of 5mm of water on the opposite side to the one to which the heat was applied. The fabric performance was excellent and despite embrittlement, it appeared entirely suitable for use as a replacement for an asbestos cloth fire curtain.

This was in addition to the previously-noted excellent weld splash resistance and it demonstrated that glass fabrics treated according to the invention can be used at temperatures well above the softening point of the glass, providing that some embrittlement is acceptable.

The following examples illustrate the use of a carbonising treatment.

## Example 4

A 2000g/m$^2$ twill-weave glass fabric woven from bulked continuous-filament 'E' glass yarns (treated with a conventional glass fibre dressing for product/processing purposes) was padded through an aqueous composition comprising:-

| | | |
|---|---|---|
| Farina starch (dissolved) | 2.0 | parts by weight |
| Farina starch (suspended) | 10.5 | "    "    " |
| Di-ammonium phosphate | 6.3 | "    "    " |
| Silicone oil (as 30% w/w emulsion) | 2.0 | "    "    " |
| Water | to 100.0 | "    "    " |

(The dissolved starch served to thicken the composition and to prevent suspended ingredients from settling.)

The padding mangle was adjusted to give a wet pick-up of 40% on fabric weight, so after drying, the fabric, (which already contained about 3% on fabric weight of maize starch as a weaving size), contained a char-forming composition comprising:-

| | | |
|---|---|---|
| Mixed starches | 8.0% on fabric weight | |
| Di-ammonium phosphate | 2.5% "    "    " | (31% w/w on starch) |
| Silicone oil | 0.8% on fabric weight | |

The fabric was then heated in open width for 10 minutes at 270°C and allowed to condition overnight at ambient temperature and humidity before being tested for resistance to intense heat, smoke generation on heating, burning of residual dressing, strength, flexibility and "mark-off" of the char.

Heat resistance was assessed by positioning a fabric sample at the top of the inner blue cone of a roaring oxygen-gas flame (1360°C) and measuring the time taken by the flame to burn through the fabric. This test has been found to correlate well with molten metal retention tests such as those described in Examples 1 & 2. In this test, the treated fabric averaged 19 seconds to burn-through, compared with 10 seconds for an untreated, loomstate sample.

The residual glass fibre dressing did not burn at all in the heat resistance test and the amount of smoke generated was negligible. Mark-off and flexibility were assessed subjectively by a panel of five observers, the concensus begin that the cloth was rather stiff and not very clean. The tensile strength of the cloth was unchanged. After a light, dry mangling, followed by the application by spraying of approximately 0.5% on fabric weight of an alkali-soluble acrylic polymer and then drying, the fabric was re-examined. Heat resistance was unaffected and the dressing still did not burn. Smoke emission was increased slightly but was still very low compared with that of loomstate or uncarbonised fabric. The main changes, however, were in fabric handle and cleanliness, the fabric now being considered acceptable in both respects.

Example 5

A similar sample to that described in Example 4 was prepared using 10.5 parts of suspended maize starch instead of the suspended farina of that Example. The results were almost identical.

Example 6

An impregnation bath was prepared to contain:-

| Sucrose | 12.5 parts by weight |
|---|---|
| Di-ammonium phosphate | 7.5 parts by weight |
| Water | to 100.0 parts by weight |

The wet pick-up on 2000 g/m$^2$ fabric as used for the previous two Examples was adjusted to 40%, to leave on the dried fabric:-

| Maize starch | 3.0% on fabric weight |
|---|---|
| Sucrose | 5.0% on fabric weight |
| Di-ammonium phosphate | 3.0% on fabric weight |
| | (38% on polyol weight) |

The fabric was heated in open width for 10 minutes at 280°C, conditioned and tested.

The burn-through time (heat resistance) was 30 seconds, one of the best results obtained on any sample during the series of trials from which these particular Examples are drawn. However, the sample, although clean, was extremely stiff and was not rendered acceptably soft by mangling.

Example 7

An impregnation bath was prepared to contain:-

| Farina starch (dissolved) | 2.0 part by weight |
|---|---|
| Farina starch (suspended) | 12.0 " " " |
| Ammonium polyphosphate (insol) | 7.5 " " " |
| Silicone oil (as 30% w/w emulsion) | 2.0 " " " |
| Water | to 100.0 " " " |

The wet pick-up on the 2000 g/m$^2$ fabric as previously used was adjusted to 40% to leave on the dried fabric:-

| | |
|---|---|
| Mixed starches | 8.5% on fabric weight |
| Ammonium polyphosphate | 3.0% on fabric weight |
| | (30% on starch weight) |
| Silicone oil | 0.8% on fabric weight |

The fabric was heated in open width for 10 minutes at 270°C, conditioned and tested.

The burn-through time (heat resistance) was 27 seconds, the best recorded for a starch-based product during this series of trials. However, the additional insoluble material tended to fill the interstices of the cloth, giving an unattractive appearance. The cloth was, moreover, rather stiff and distinctly dirty, so the end product was judged not to have a good balance of properties.

Example 8

A parallel preparation to that described in Example 7 was carried out but with ammonium borate substituted for the polyphosphate. The first sample, heated at 270°C for 10 minutes, was not fully carbonised, being grey-brown rather than the usual black. On testing, it proved to have a satisfactory burn-through performance (19 seconds) and was clean to handle and quite flexible. However, it generated a considerable amount of smoke and there was a marked tendency for the residual dressing to burn on that face remote from the flame, though burning ceased immediately the flame was removed.

A second sample, heated at 350°C for 10 minutes, was much darker. This had a similar burn-through time (18 seconds) but emitted much less smoke and the residual finish did not burn. It was, however, stiffer and dirtier than the first sample, though this was much improved by the post-treatment described in Example 4.

Example 9

Using the same 2000 g/m$^2$ fabric described previously, a series of samples were prepared using a soluble maize starch and various levels of di-ammonium phosphate.

|                          | (A)  | (B)  | (C)  |                 |
|--------------------------|------|------|------|-----------------|
| Maize starch (dissolved) | 12.5 | 12.5 | 12.5 | parts by weight |
| Di-ammonium phosphate    | 1.0  | 4.0  | 7.0  | "     "     "   |

The mangle was adjusted to give a wet pick-up of 50%, leaving on the cloth:-

| Mixed starches        | 9.7   | 9.7    | 9.7    |               |
|-----------------------|-------|--------|--------|---------------|
| Di-ammonium phosphate | 0.5   | 2.0    | 3.5    |               |
|                       | (5.4) | (21.5) | (37.6) | % on starch weight |

Unlike the previous samples which were dried and carbonised in separate operations, these samples were passed in the wet state into an oven at 280°C, through which they passed in 7.5 minutes, emerging dry and carbonised. The heating effect of this oven was distinctly non-uniform as the air circulated within it blew predominantly against one side of the cloth. This was reflected in the products when they emerged. Sample A was black on one side (the exposed side) and medium grey-brown on the other; B was black on one side and dark-brown on the other side; C, however, was evenly black on both sides.

This non-uniform characteristic extended to their burn-through (heat resistance) performance, A and B giving 16 and 23, and 18 and 21 seconds for their light and dark sides, respectively. Sample C, however, gave a mean of 20 seconds for each side. As might be expected, cleanliness also followed this same pattern, though all were quite good. All were considered acceptable on smoke emission, none of the finishes burned and all were of substantially the same strength as the loomstate fabric. They were all rather stiff however.

Sample C was sprayed on both sides with an emulsion containing a silicone oil and a flexible acrylic binder at a rate calculated to leave 0.25% per side of each component on the fabric. It was then subjected to a light mangling and dried at approximately 120°C to give a sample which was considered to have a very acceptable balance of properties.

CLAIMS:-

1. A method of improving the weld splash resistance of a glass fibre fabric, characterised in that the fabric is treated with a non-intumescent, char-forming composition.

2. The method of claim 1, characterised in that said composition comprises at least one dehydratable organic polyol, and a dehydrating agent for the polyol.

3. The method of claim 2 characterised in that the polyol is a sugar, starch or a polyhydric alcohol.

4. The method of claim 2 or claim 3 characterised in that the dehydrating agent is an ammonium or amine phosphate, or a phosphate ester, or a borate.

5. The method of any one of claims 2 to 4, characterised in that the polyol is applied at the rate of from 2 to 20% by weight of the fabric.

6. The method according to any one of claims 2 to 4, characterised in that the polyol is applied at the rate of from 3 to 15% by weight of the fabric.

7. The method of any one of claims 2 to 4 characterised in that the dehydrating agent is present in an amount of 5 to 75% by weight of the polyol.

8. The method of any one of claims 2 to 4 characterised in that the dehydrating agent is present in an amount of from 10 to 40% by weight of the polyol.

0044614

9. The method of claim 1, characterised in that the composition comprises a single component, self-catalysing, non-intumescent char-forming material.

10. A method according to any preceding claim, further characterised that the composition includes a plasticiser and/or a polymeric binder.

11. A method of reducing the smoke and/or flame emission properties of a glass fibre fabric characterised in that the fabric is treated with a non-intumescent char-forming composition, followed by subjecting the treated fabric to a carbonising treatment.

12. The method of claim 11 further characterised in that the said carbonising treatment comprises heating the fabric to develop charring of the char-forming composition without at the same time affecting the integrity of the glass fibre fabric to any significant extent.

13. The method of Claim 11 or Claim 12, characterised by the further step of mangling the fabric after said carbonising treatment.

14. The method of any one of Claims 11, 12 or 13 further characterised by the step of treating the fabric with a lubricant after said carbonising treatment.